# EUROPÄISCHE PATENTSCHRIFT

(11) **EP 0 622 256 B1**
(45) Veröffentlichungstag und Bekanntmachung des Hinweises auf die Patenterteilung: **25.09.1996**
(21) Anmeldenummer: 94106774.6
(22) Anmeldetag: 29.04.1994
(51) Int. Cl.: B60H 1/03

(54) **Heizkreislauf eines Fahrzeuges mit einem motorunabhängigen Heizgerät**
Vehicle heating circuit with a heating device independent from the engine
Circuit de chauffage d'un véhicule avec un dispositif de chauffage indépendant du moteur

(30) Priorität: 29.04.1993 DE 4314089
(43) Veröffentlichungstag der Anmeldung: 02.11.1994
(73) Patentinhaber: WEBASTO THERMOSYSTEME GmbH, D-82131 Stockdorf (DE)
(72) Erfinder: Kohlberger, Wilhelm, D-86899 Landsberg (DE)
(74) Vertreter: Wiese, Gerhard

(56) Entgegenhaltungen:
- DE-A- 3 828 470
- DE-A- 3 900 255
- DE-A- 4 022 731

## Beschreibung

Die Erfindung betrifft einen Heizkreislauf eines Fahrzeuges mit einem motorunabhängigen Heizgerät, der gemäß dem Oberbegriff des Patentanspruchs 1 eine Vorlaufleitung für die Verbindung eines Verbrennungsmotors mit einem Wärmetauscher, eine Rücklaufleitung zum Wärmetauscher zum Verbrennungsmotor, eine die Vorlaufleitung mit der Rücklaufleitung verbindende Bypaßleitung und ein Thermostatventil aufweist, das den Wärmeträgerfluß durch die Bypaßleitung und den Verbrennungsmotor steuert.

Ein derartiger Heizkreislauf ist aus der DE 40 22 731 A1 bekannt. Zur variablen Steuerung des Kühlmittelflusses durch die Bypaßleitung und den Verbrennungsmotor ist im Stand der Technik vorgesehen, daß das Thermostatventil mit mindestens einem zusätzlichen übergeordneten elektrisch aktivierbaren Verstellantrieb versehen ist. Ein derartiges Thermostatventil ist in seinem Aufbau ausgesprochen kompliziert und entsprechend teuer. Darüberhinaus bildet die Abhängigkeit von einer elektrischen Verstellmöglichkeit eine zusätzliche Fehlerquelle, die die Ausfallwahrscheinlichkeit erhöht.

Der vorliegenden Erfindung liegt die Aufgabe zugrunde, eine variable Steuerung eines Heizkreislaufes für verschiedene Einsatzfälle mit einfachen Mitteln zu erreichen.

Diese Aufgabe wird erfindungsgemäß durch die im kennzeichnenden Teil des Patentanspruchs 1 angegebenen Mittel gelöst.

Bei der erfindungsgemäßen Lösung ist ein bezüglich der Austrittstemperatur des Wärmeträgers auf wenigstens einen vorgebbaren Wert regelbares Heizgerät in der Rücklaufleitung vor der Abzweigung der Bypaßleitung angeordnet. Ferner weist das Thermostatventil eine Einrichtung auf, mittels der in Abhängigkeit vom Druck in einem ersten Zweig der Vorlaufleitung das Thermostatventil umgehbar ist. Bei dieser Kombination von Lösungselementen ergibt sich durch eine Vorwahl der Austrittstemperatur des Wärmeträgers in Abstimmung zur Öffnungstemperatur des Thermostatventils sowie zusätzlich durch die druckabhängige Übersteuerung des Thermostatventils bei Betrieb des Verbrennungsmotors und der daran angeschlossenen Umwälzpumpe eine selbsttätige Einstellung verschiedener Kreislaufvarianten ohne zusätzliche, mit Fremdenergie beaufschlagte Stellelemente.

In einer vorteilhaften Ausführungsform erfolgt die Regelung der Austrittstemperatur mittels einer kontinuierlichen Heizleistungsregelung. Bei dieser werden in an sich bekannter Weise die dem Heizgerät zugeführte Brennstoff- bzw. Brennluftmenge zur Einstellung einer bestimmten Heizleistung variiert.

In einer alternativen oder ergänzenden Ausgestaltung kann die Regelung der Austrittstemperatur auch mittels einer Durchflußmengenregelung des Wärmeträgers durch das motorunabhängige Heizgerät erfolgen. Dies geschieht beispielsweise durch Veränderung der Drehzahl der dem Heizgerät zugeordneten Umwälzpumpe.

Besonders vorteilhaft ist eine Ausführungsform, bei der der vorgebbare Wert der Austrittstemperatur des Wärmeträgers mittels eines vorzugsweise im Innenraum in Reichweite des Fahrzeugführers angeordneten Stellelements an einem Steuergerät des Heizgeräts einstellbar ist. Dadurch sind auf besonders komfortable Weise Heizkreislaufvarianten einstellbar, bei denen der vorgebbare Wert der Austrittstemperatur entweder unterhalb der Öffnungstemperatur oder oberhalb der Öffnungstemperatur des Thermostatventils liegt.

Eine zweckmäßige Einbindung des Thermostatventils erfolgt so, daß dieses unterhalb seiner Öffnungstemperatur die Vorlaufleitung vor der Einmündung der Bypaßleitung verschließt.

Es ist ferner vorteilhaft, wenn ein Rückschlagventil zur Unterbindung eines Wärmeträgerstroms vom Thermostatventil über die Bypaßleitung zur Rücklaufleitung vorgesehen ist, wobei dieses besonders vorteilhaft eine Baueinheit mit dem Thermostatventil bildet.

Nachfolgend ist ein Ausführungsbeispiel der Erfindung anhand der Zeichnung beschrieben. Es zeigt:
- Fig. 1: eine schematische Darstellung eines Heizkreislaufs,
- Fig. 2: eine vergrößerte Darstellung des Thermostatventils,
- Fig. 3: eine vergrößerte Darstellung eines Teilbereichs des Thermostatventils gemäß der Ziffer III in Fig. 2,
- Fig. 4a-9a: verschiedene Kreislaufvarianten
- Fig. 4b-9b: den Kreislaufvarianten gemäß den Fig. 4a-9a zugeordnete Zeit/Temperaturdiagramme.

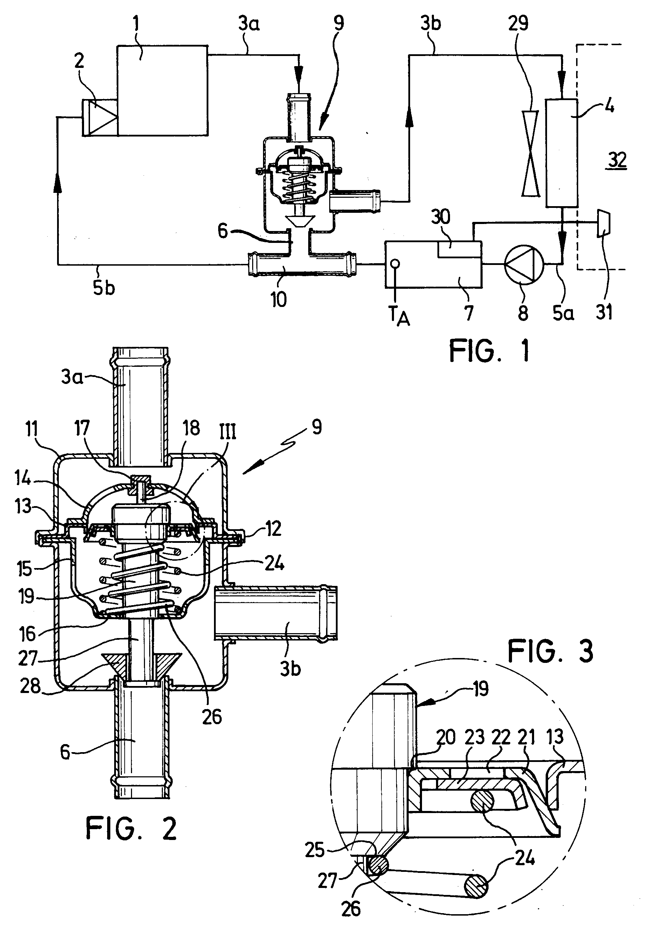

In Fig. 1 ist an einem Verbrennungsmotor 1 eine Umwälzpumpe 2 angeordnet, die beim Betrieb desselben mit angetrieben wird. Dadurch wird flüssiger Wärmeträger vom Verbrennungsmotor 1 durch eine Vorlaufleitung 3, die sich aus einem ersten Zweig 3a und einem zweiten Zweig 3b zusammensetzt zu einem Wärmetauscher 4 gefördert. Mittels eines vor dem Wärmetauscher 4 angeordneten von einem nicht gezeigten Elektromotor antreibbaren Gebläse 29 kann Luft durch den Wärmetauscher 4 gefördert und in diesem erwärmt einem Innenraum 32 zugeführt werden. Der flüssige Wärmeträger verläßt den Wärmetauscher 4 über eine Rücklaufleitung 5, die von einem ersten Zweig 5a und einem zweiten Zweig 5b gebildet wird, welch letzterer zurück zur Saugseite der Umwälzpumpe 2 am Verbrennungsmotor 1 führt. Die Vorlaufleitung 3 steht mit der Rücklaufleitung 5 über eine Bypaßleitung 6 in Verbindung. Die Abzweigstellen dieser Bypaßleitung 6 unterteilen die Vorlaufleitung 3 in den ersten Zweig 3a und den zweiten Zweig 3b sowie die Rücklaufleitung 5 in den ersten Zweig 5a und den zweiten Zweig 5b.

Im ersten Zweig der Rücklaufleitung 5a ist ein motorunabhängig betreibbares Heizgerät 7 angeordnet, dem durch nicht gezeigte Fördereinrichtungen Brennluft und Brennstoff zugeführt werden, die im Heizgerät 7 als brennbares Gemisch verbrannt werden und zur Erwärmung des flüssigen Wärmeträgers dienen. Dem Heizgerät 7 ist eine in Richtung vom Wärmetauscher 4 zur Abzweigstelle der Bypaßleitung 6 fördernde Umwälzpumpe 8 zugeordnet. Das Heizgerät 7 ist in der Rücklaufleitung 5a so angeordnet, daß es sich sehr nahe an der Abzweigstelle zur Bypaßleitung 6 befindet. Der erste Zweig 5a, der zweite Zweig 5b und die Bypaßleitung 6 sind an der Abzweigstelle durch ein T-Stück 10 miteinander verbunden. An dieses T-Stück 10 schließt sich in Richtung der Bypaßleitung 6 unmittelbar ein Thermostatventil 9 an, in das außer der Bypaßleitung 6 auch der erste Zweig 3a der Vorlaufleitung 3 einmündet und aus dem der zweite Zweig der Vorlaufleitung 3b ausmündet.

Das Heizgerät 7 ist durch Veränderung der Brennstoff- und Brennluftmenge mittels eines in ihm integrierten Steuergerätes 30 in seiner Heizleistung beispielsweise zwischen 2 KW und 9 KW regelbar. Als Regelgröße dient die Austrittstemperatur des flüssigen Wärmeträgers aus dem Heizgerät 7. Diese ist mit T_{A} bezeichnet. Die Regelgröße T_{A} ist am Steuergerät 30 mittels eines im Innenraum 32 angeordneten, in Reichweite des Fahrers befindlichen Stellelements 31 vorgebbar. Die Vorwahl der Regeltemperatur erfolgt über einen Pin am Steuergerät so, daß eine Belegung des Pins mit einer negativen Spannung einer Regeltemperatur von 65°C, und eine Belegung desselben Pins mit einer positiven Spannung einer Regeltemperatur von 80°C entspricht. Als Stellelement 31 kommt beispielsweise ein einfacher Zweiwege-Schalter in Frage, der zwei der Minusbelegung bzw. der Plusbelegung des Pins entsprechende Schaltstellungen aufweist.

In Fig. 2 ist das in Fig. 1 nur schematisch gezeigte Thermostatventil 9 vergrößert dargestellt. Das Thermostatventil 9 wird von einem Gehäuse 11 umschlossen, an dem drei Stutzen ausgebildet sind, wobei in den oberen Stutzen der erste Zweig 3a der Vorlaufleitung und in den unteren Stutzen die Bypaßleitung 6 einmündet und wobei aus dem nach rechts weisenden Stutzen der zweite Zweig 3b der Vorlaufleitung 3 ausmündet. Das Gehäuse 11 weist einen umlaufenden Flansch 12 auf, in den ein Flanschring 13 dichtend eingespannt ist. Am Flanschring 13 ist ein nach oben gewölbter Bügel 14 und an der Unterseite ein nach unten gewölbter Korb 15 fest angeordnet. Sowohl der Bügel 14 als auch der Korb 15 sind in bestimmten Bereichen ihres Umfanges ausgespart, sodaß von beiden Seiten des Flanschringes 13 flüssiger Wärmeträger bis zu der vom Flanschring 13 gebildeten Trennstelle vordringen kann. Der Korb 15 weist an seinem unteren Ende einen horizontalen Stützring 16 auf, in dem ein zentrales, nicht näher bezeichnetes Durchgangsloch vorgesehen ist. Der Bügel 14 weist an seinem höchsten Punkt koaxial zur Mittellängsachse des Gehäuses 11 eine Führungshülse 17 auf, die ein nicht näher bezeichnetes nach unten geöffnetes Sackloch enthält. In dieses Sackloch greift ein an einem Dehnstoffelement 19 angeordneter, nach oben weisender Zapfen 18 ein. Das Dehnstoffelement 19 wird insgesamt von einem mehrfach abgesetzten zylindrischen Körper gebildet. An den Zapfen 18 schließt sich nach unten der im Durchmesser größte Abschnitt an, der weiter unten in einen im Durchmesser reduzierten Abschnitt übergeht und mit dem an dieser Übergangsstelle gebildeten Bund 20 von oben an einem Hauptventilteller 21 anliegt. Wie in Fig. 3 ersichtlich, ist dieser Hauptventilteller 21 ein insgesamt kreisringförmiger Körper, dessen Innen- und Außenkante nach unten abgekröpft ist und der am Umfang verteilt mehrere Durchgangslöcher 22 aufweist. Die Kröpfung des Innenrandes des Hauptventiltellers 21 liegt dichtend am zweiten Abschnitt des Dehnstoffelementes 19 an. Die Kröpfung des Außenrandes des Hauptventiltellers 21 liegt an einer ebenfalls nach unten gerichteten Kröpfung des Innenrandes des Flanschrings 13 dichtend an. Die Durchgangslöcher 22 werden von unten her durch einen Nebenventilteller 23 in der Normalstellung dicht verschlossen. Dieser Nebenventilteller 23 ist als Kreisringscheibe ausgebildet und so bemessen, daß er innerhalb der Kröpfungen des Hauptventiltellers 21 mit reichlich seitlichem Spiel vertikal bewegbar ist. An der Unterseite des Nebenventiltellers 23 liegt ein Ende einer Spiralfeder 24 an, deren anderes Ende sich am Stützring 16 des Korbes 15 abstützt. Durch die Kraft der Feder 24 wird der Nebenventilteller 23 dichtend an die Unterseite des Hauptventiltellers 21 und wird gleichzeitig der Hauptventilteller 21 dichtend an die Kröpfung des Flanschringes 13 angedrückt. Die Feder 24 ist so ausgelegt, daß sie von der von der Umwälzpumpe 2 bei laufendem Verbrennungsmotor 1 erzeugten Druck multipliziert mit der von diesem Druck im oberen Teil des Thermostatventils 9 beaufschlagten Flache und der daraus resultierenden Druckkraft zusammengedrückt wird.

Das Dehnstoffelement 19 ist so ausgelegt, daß es sich bei einer Wassertemperatur von 70°C soweit ausdehnt, daß der Bund 20 den Hauptventilteller 21 mit nach unten bewegt und dadurch von seinem Dichtsitz am Flanschring 13 abhebt. Das Dehnstoffelement weist an den zweiten Abschnitt nach unten anschließend einen weiteren im Durchmesser noch stärker reduzierten Schaft 27 auf. An der Übergangsstelle vom zweiten Abschnitt zum Schaft 27 ist ein nach unten gerichteter Bund 25 ausgebildet, an dem das eine Ende einer zweiten Feder 26 anliegt. Die Feder 26 stützt sich mit ihrem anderen Ende ebenfalls an der Oberseite des Stützrings 16 ab. Die Feder 26 weist einen geringeren Durchmesser als die Feder 24 auf und wird innerhalb der letzteren angeordnet. Die Feder 26 übt eine Rückstellkraft entgegen der Ausdehnungsrichtung auf das Dehnstoffelement 19 aus. Der unten am Dehnstoffelement 19 angeordnete Schaft 27 reicht bis knapp in den Stutzen hinein, an dem die Bypaßleitung 6 angeschlossen ist und weist an seinem unteren Ende einen nicht näher bezeichneten vorspringenden Bund auf. Auf dem Schaft ist gleitend ein Schließkegel 28 angeordnet. Die Kegelflächen des Schließkegels 28 dienen als Rückschlagventil für die Bypaßleitung 6. Sobald im Gehäuse 11 des Thermostatventiles 9 ein Druck anliegt, der höher ist als der in der Bypaßleitung 6, legt sich der Schließkegel 28 dichtend an den Stutzen der Bypaßleitung 6 an und verhindert, daß flüssiger Wärmeträger vom Thermostatventil 9 zur Bypaßleitung 6 vordringt.

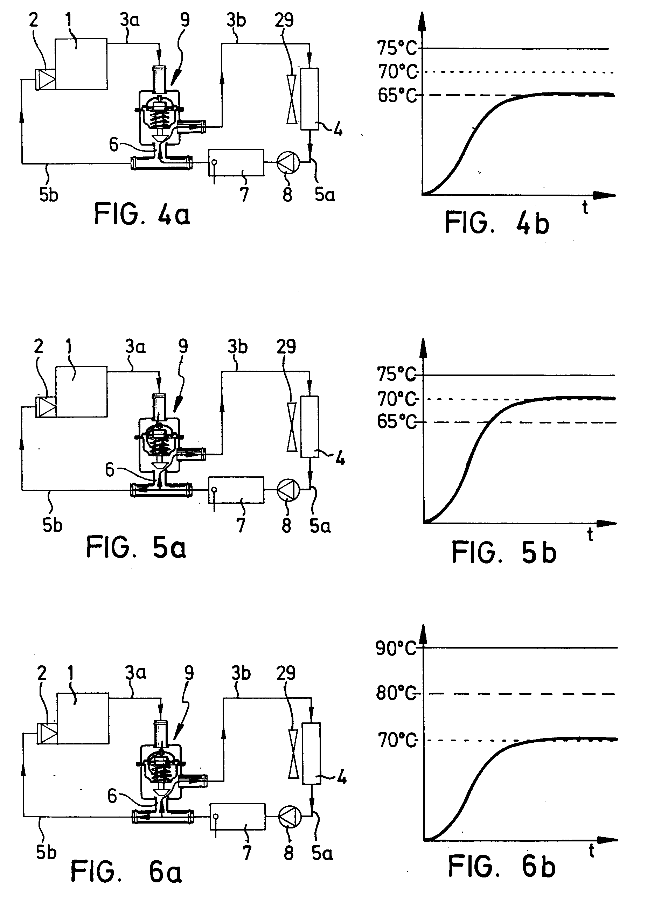

Nachstehend soll die Funktion der vorstehend beschriebenen Anordnung bei verschiedenen Kreislaufvarianten anhand der Fig. 4a-9b beschrieben werden. In den Diagrammen in Fig. 4b bis 9b bedeutet eine punktierte horizontale Linie die Regeltemperatur des Wachsthermostaten des Thermostatventils, eine gestrichelte horizontale Linie symbolisiert die jeweils eingestellte Regeltemperatur T_{A} für den Austritt aus dem Heizgerät 7 und eine durchgezogene Linie die Abschalttemperatur des Heizgeräts bei einer Wärmeabnahme von weniger als 2KW, die jeweils um 10°C über der eingestellten Regeltemperatur des Heizgeräts 7 liegt.

In Fig. 4a ist der Verbrennungsmotor 1 und demzufolge auch die Umwälzpumpe 2 außer Betrieb. Das Stellelement 31 befindet sich in der Schaltstellung "bevorzugte Kabinenheizung", wodurch an dem die Regeltemperatur beeinflußenden Pin des Steuergeräts 30 eine negative Spannung anliegt und das Steuergerät 30 als Austrittstemperatur T_{A} am Heizgerät 7 eine Temperatur von 65°C vorgibt. Aufgrund der herrschenden Außentemperaturen und der vom Fahrer einzustellenden Innenraum-Solltemperatur soll der Wärmebedarf größer als 2 KW sein, d.h. größer als die kleinste vom Heizgerät 7 bereitzustellende Heizleistung vor Abschaltung in eine Regelpause. Der flüssige Wärmeträger strömt vom Heizgerät 7 über die Bypaßleitung 6 durch das Thermostatventil 9 und über den zweiten Zweig 3b der Vorlaufleitung zum Fahrzeugwärmetauscher 4, der durch Anströmung mittels des Gebläses 29 Wärme an den Innenraum 32 abgibt. Über den ersten Zweig 5a der Rücklaufleitung 5 und die Umwälzpumpe 8 strömt der Wärmeträger zurück zum Heizgerät 7. In Fig. 4b ist zu ersehen, daß nach relativ kurzer Zeit die Austrittstemperatur von 65°C erreicht ist. Nachdem die Umwälzpumpe 2 nicht läuft und die Öffnungstemperatur T_{Ö} des Thermostatventils 9 von 70°C nicht erreicht wird, heizt das Heizgerät 7 durchgehend mit einer etwas über der unteren Leistungsgrenze von 2 KW liegenden Leistung durch und hält die Temperatur des Wärmeträgers auf 65°C. Diese Betriebsart entspricht dem Nachtheizen einer Kabine eines abgestellten Lastkraftwagens, bei niedrigen Außentemperaturen.

In Fig. 5a ist der Verbrennungsmotor 1 und die Umwälzpumpe 2 ebenfalls außer Betrieb. Das Stellelement 31 befindet sich in der gleichen Position wie im vorstehend beschriebenen Beispiel, sodaß die Regeltemperatur für die Austrittstemperatur T_{A} wiederum 65°C beträgt. Der Wärmebedarf soll jedoch in diesem Beispiel kleiner als 2 KW, d.h. kleiner als die niedrigste vom Heizgerät 7 erzeugbare Heizleistung sein. Dies tritt beispielsweise ein, wenn das Gebläse 29 auf eine gegenüber dem Beispiel der Fig. 4a reduzierte Drehzahl oder ein Innenraum-Solltemperaturgeber auf einen niedrigeren Wert eingestellt ist, sodaß über den Wärmetauscher 4 weniger Energie dem Kreislauf entnommen wird. Wie dem Diagramm in Fig. 5b zu entnehmen ist, überschreitet die Temperatur des Wärmeträgers sehr schnell die Regeltemperatur von 65°C und erreicht eine Temperatur von 70°C, bei der sich das Thermostatventil 9 öffnet. Dadurch spaltet sich der Strom des Wärmeträgers vom Heizgerät 7 kommend auf, wobei ein Teil durch die Bypaßleitung 6 unmittelbar zum zweiten Zweig 3b der Vorlaufleitung 3 gefördert wird und ein anderer Teil über den zweiten Zweig 5b der Rücklaufleitung, die stillstehende Umwälzpumpe 2 und den kalten Verbrennungsmotor 1 sowie den ersten Zweig der Vorlaufleitung 3a und den geöffneten Ventilsitz (Hauptventilteller 21) des Thermostatventils 9 zum zweiten Zweig der Vorlaufleitung 3b gefördert wird. Das Heizgerät 7 wird dabei auf seiner niedrigsten Leistungsstufe von 2 KW betrieben. Das Thermostatventil 9 sorgt durch Einspeisung von relativ kühlem Wärmeträger vom kalten Verbrennungsmotor 1 selbsttätig für eine Aufrechterhaltung einer Temperatur von 70°C im kleinen Kabinenkreislauf. Der kleine Kabinenkreislauf wird vom Heizgerät 7, dem ersten Zweig der Rücklaufleitung 5a, der Bypaßleitung 6, dem zweiten Zweig der Vorlaufleitung 3b, und dem Wärmetauscher 4 gebildet. Dadurch, daß sich das Dehnstoffelement 19 bei exakt 70°C öffnet, wird jeweils eine kleine Menge kalten flüssigen Wärmeträgers von der Vorlaufleitung 3a in diesen Kreislauf mit eingespeist. Sobald die Temperatur unter 70°C fällt, schließt das Thermostatventil 9 und der Wärmeträger wird wieder ausschließlich im kleinen Kreislauf umgewälzt. In dieser Betriebsart kann trotz Unterschreiten der unteren Leistungsstufe des Heizgeräts 7 ein kontinuierlicher Nachtheizbetrieb für die Beheizung einer LKW-Kabine erreicht werden, ohne daß dies für den Fahrer mit einer zusätzlichen Geräuschbelästigung und für die Fahrzeugbatterie mit einer zusätzlichen Belastung durch Wiederstarts des Heizgeräts 7 aus einer Regelpause verbunden ist.

In Fig. 6a ist der Verbrennungsmotor 1 und die Umwälzpumpe 2 außer Betrieb. Das Stellelement 31 ist in eine Schaltposition umgelegt worden, die der Betriebsart "Motor vorwärmen" entspricht, bei der über das Anlegen einer positiven Spannung am Pin des Steuergeräts 30 eine Regeltemperatur von 80°C für die Austrittstemperatur T_{A} des Wärmeträgers eingestellt wird. In diesem Falle versticht das Heizgerät 7 den Wärmeträger auf eine Austrittstemperatur T_{A} von 80°C zu regeln. Das Thermostatventil 9 öffnet bei 70°C und begrenzt dadurch die Austrittstemperatur. Das Heizgerät 7 bleibt im Vollastbetrieb wobei sich, wie in Fig. 6b zu ersehen, eine Temperatur von etwa 70°C einstellt. Diese Betriebsweise entspricht einem Start des Verbrennungsmotors 1 nach einer sehr kalten Nacht, wobei der Verbrennungsmotor 1 schnell soweit vorgewärmt werden soll, daß er ohne Schwierigkeiten startet. Die Kabine soll gleichzeitig auf einer bestimmten Temperatur bleiben.

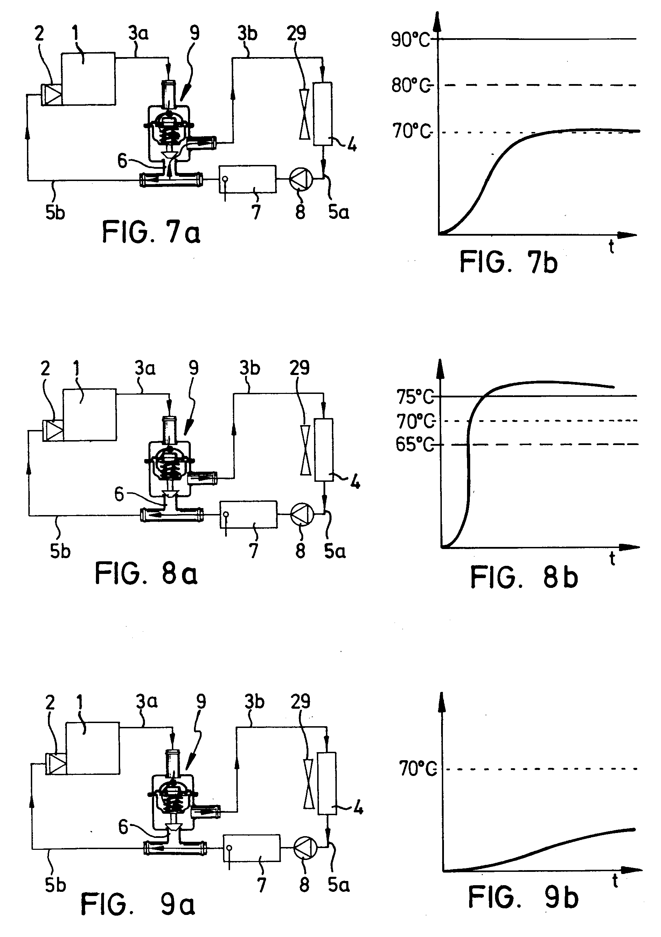

Fig. 7a und 7b stellen eine Variante zu Fig. 6a und Fig. 6b dar, bei der das Gebläse 29 außer Betrieb ist und insofern über den Wärmetauscher 4 keine Wärme in den Innenraum 32 abgegeben wird. Dadurch wird die gesamte vom in Vollast betriebenen Heizgerät 7 abgegebene Energie dem Verbrennungsmotor 1 zu einer schnellen Vorwärmung desselben zugeführt. Der Wärmeträger wird auch hier wie im Ausführungsbeispiel gemäß Fig. 6a und b ausgehend vom Heizgerät 7 im großen Kreislauf über den zweiten Zweig 5b der Rücklaufleitung, die stillstehende Umwälzpumpe 2, den Verbrennungsmotor 1, den ersten Zweig der Vorlaufleitung 3a, das Thermostatventil 9, den zweiten Zweig 3b der Vorlaufleitung, den Wärmetauscher 4 und den ersten Zweig 5a der Rücklaufleitung zurück zum Heizgerät 7 umgewälzt.

In Fig. 8a ist der Verbrennungsmotor 1 und entsprechend auch die Umwälzpumpe 2 in Betrieb. Das Heizgerät 7 ist ebenfalls in Betrieb. Über das Stellelement 31 ist wiederum eine Regeltemperatur von 65°C am Steuergerät 30 eingestellt. Heizgerät 7 und Verbrennungsmotor 1 heizen den Wärmeträger rasch auf. Wie in Fig. 8b zu ersehen, geht das Heizgerät 7 bei einer Temperatur von 75°C in die Regelpause. Kurz oberhalb dieser Temperatur öffnet üblicherweise ein weiteres nicht dargestelltes Thermostatventil, das einen mit dem Verbrennungsmotor 1 in Verbindung stehenden Kühlerkreislauf freigibt. Die Temperatur von knapp über 75°C wird bei laufendem Verbrennungsmotor 1 dadurch konstant gehalten. Dadurch, daß die Umwälzpumpe 2 in Betrieb ist baut sich im Thermostatventil 9 ein Druck auf, der höher ist als der Druck in der Bypaßleitung 6. Dadurch wird der Schließkegel 28 in Schließstellung gebracht. Der Wärmeträger wird demzufolge ausschließlich im großen Kreislauf umgewälzt. Der von der Umwälzpumpe 2 des Verbrennungsmotors 1 erzeugte Druck wirkt auf die in Fig. 3 zu ersehenden Durchgangslöcher 22 im Hauptventilteller 21. Die als Produkt aus dem erzeugten Druck und der summierten Fläche der Durchgangslöcher 22 resultierende Kraft ist groß genug, um den Nebenventilteller 23 gegen die Druckfeder 24 nach unten zu bewegen. Dieses "Überdrücken" des Thermostatventils 9 ist auf die Anfangsphase eines derartigen Heizbetriebes begrenzt, da das Dehnstoffelement 19 bei einer Temperatur von 70°C ohnehin aufgrund seiner Wärmedehnung den Ventilsitz des Hauptventiltellers 21 freigibt. Der etwas erhöhte Energiebedarf der Umwälzpumpe 2 in dieser Anlaufphase und der aufgrund des erhöhten Strömunswiderstandes durch die Kraft der Feder 24 verringerte Durchfluß des Wärmeträgers können als geringfügige Nachteile bei dem insgesamt vereinfachten Aufbau in Kauf genommen werden.

In Fig. 9a ist schließlich ein reiner Heizbetrieb über den Verbrennungsmotor 1 dargestellt. Das Heizgerät 7 ist in diesem Fall ausgeschaltet und die Umwälzpumpe 2 wälzt den Wärmeträger im großen Kreislauf bei sehr langsamer Erwärmung um. Je nach äußeren Bedingungen wird dabei früher oder später auch die für die Öffnung des Thermostatventils 9 erforderliche Temperatur T_{Ö} von 70°C erreicht.

Als Variante zu der vorstehend beschriebenen Einstellung der Regeltemperatur T_{A} über ein Stellelement 31 kann auch eine von einem LKW-Hersteller fest eingegebene Regeltemperatur, die direkt am Steuergerät 30 eingegeben wird, vorgesehen sein. Dabei wäre jedoch die vorstehend beschriebene Variantenvielfalt auf einige wenige Kreislaufvarianten beschränkt. Insgesamt wird durch das vorstehend beschriebene System eine weitestgehend selbsttätige Regelung verschiedener Kreislaufvarianten ermöglicht, die alle bekannten Lastenheftforderungen der LKW-Hersteller an derartige Kreisläufe abdecken.

### Bezugszeichenliste

- 1: Verbrennungsmotor
- 2: Umwälzpumpe (an 1)
- 3a, b: Vorlaufleitung
- 4: Wärmetauscher
- 5a, b: Rücklaufleitung
- 6: Bypaßleitung
- 7: Heizgerät
- 8: Umwälzpumpe (an 7)
- 9: Thermostatventil
- 10: T-Stück
- 11: Gehäuse
- 12: Flansch
- 13: Flanschring
- 14: Bügel
- 15: Korb
- 16: Stützring
- 17: Führungshülse
- 18: Zapfen
- 19: Dehnstoffelement
- 20: erster Bund
- 21: Haupt-Ventilteller
- 22: Durchgangslöcher
- 23: Neben-Ventilteller
- 24: Feder (für 23)
- 25: zweiter Bund
- 26: Feder (für 19)
- 27: Schaft (an 19)
- 28: Schließkegel
- 29: Gebläse
- 30: Steuergerät
- 31: Stellelement
- 32: Innenraum
- T_{A}: Austrittstemperatur (von 7)
- T_{Ö}: Öffnungstemperatur (von 9)

## Patentansprüche

1. Heizkreislauf eines Fahrzeuges mit einem motorunabhängigen Heizgerät (7), mit einer Vorlaufleitung (3a, 3b), die einen mit einer Umwälzpumpe (2) versehenen Verbrennungsmotor (1) mit einem Wärmetauscher (4) zur Beheizung eines Innenraums (32) verbindet, mit einer Rücklaufleitung (5a, 5b) zur Rückführung eines flüssigen Wärmeträgers vom Wärmetauscher (4) zum Verbrennungsmotor (1), mit einer die Vorlaufleitung (3b) mit der Rücklaufleitung (5a) verbindenden Bypaßleitung (6), und mit einem in Abhängigkeit von der Temperatur des Wärmeträgers öffnenden und schließenden Thermostatventil (9), das den Wärmeträgerfluß durch die Bypaßleitung (6) und den Verbrennungsmotor (1) steuert, **dadurch gekennzeichnet**, daß das motorunabhängige Heizgerät (7) in der Rücklaufleitung (5a) vor der Abzweigung der Bypaßleitung (6) angeordnet ist, daß die Austrittstemperatur (T_{A}) des Wärmeträgers aus dem Heizgerät (7) auf wenigstens einen vorgebbaren Wert regelbar ist, aufgrund dessen das Thermostatventil (9) selbsttätig temperaturabhängig verschiedene Kreislaufvarianten steuert und wobei das Thermostatventil (9) durch eine Einrichtung (23, 24) in Abhängigkeit vom Druck in einem ersten Zweig der Vorlaufleitung (3a) umgehbar ist.

2. Heizkreislauf nach Anspruch 1, **dadurch gekennzeichnet**, daß die Regelung der Austrittstemperatur (T_{A}) mittels einer kontinuierlichen Heizleistungsregelung erfolgt.

3. Heizkreislauf nach Anspruch 1 oder 2, **dadurch gekennzeichnet**, daß die Regelung der Austrittstemperatur (T_{A}) mittels einer Durchflußmengenregelung erfolgt.

4. Heizkreislauf nach einem der vorhergehenden Ansprüche, **dadurch gekennzeichnet**, daß der vorgebbare Wert der Austrittstemperatur (T_{A}) mittels eines im Innenraum (32) angeordneten Stellelements (31) an einem Steuergerät (30) des Heizgeräts (7) einstellbar ist.

5. Heizkreislauf nach einem der vorhergehenden Ansprüche, **dadurch gekennzeichnet**, daß der vorgebbare Wert der Austrittstemperatur (T_{A}) unterhalb der Öffnungstemperatur (T_{Ö}) des Thermostatventils (9) liegt.

6. Heizkreislauf nach einem der Ansprüche 1 bis 4, **dadurch gekennzeichnet**, daß der vorgebbare Wert der Austrittstemperatur (T_{A}) oberhalb der Öffnungstemperatur (T_{Ö}) des Thermostatventils (9) liegt.

7. Heizkreislauf nach einem der vorhergehenden Ansprüche, **dadurch gekennzeichnet**, daß das Thermostatventil (9) unterhalb der Öffnungstemperatur (T_{Ö}) die Vorlaufleitung (3a) vor der Einmündung der Bypaßleitung (6) verschließt.

8. Heizkreislauf nach einem der vorhergehenden Ansprüche, **dadurch gekennzeichnet**, daß ein Rückschlagventil (28) zur Unterbindung eines Wärmeträgerstroms vom Thermostatventil (9) über die Bypaßleitung (6) zur Rücklaufleitung (5a, 5b) vorgesehen ist.

9. Heizkreislauf nach Anspruch 8, **dadurch gekennzeichnet**, daß das Rückschlagventil (28) mit dem Thermostatventil (9) eine Baueinheit bildet.

10. Heizkreislauf nach einem der vorhergehenden Ansprüche, **dadurch gekennzeichnet**, daß als druckabhängige Einrichtung zur Umgehung des Thermostatventils (9) in einem Haupt-Ventilteller (21) desselben Durchgangslöcher (22) vorgesehen sind, die mittels eines durch eine Feder (24) belasteten Neben-Ventilteller (23) verschließbar sind.

## Claims

1. A heating circuit of a vehicle with a heater (7) independent of the engine, with a feed line (3a, 3b) which, for heating an interior (32), connects a heat exchanger (4) to an internal combustion engine (1) which is provided with a circulating pump (2), and which has a return line (5a, 5b) for returning a liquid heat carrier from the heat exchanger (4) to the internal combustion engine (1) and with a bypass line (6) connecting the feed line (3b) to the return line (5a) and with a thermostatic valve (9) which opens and closes as a function of the temperature of the heat carrier and which controls the flow of heat carrier through the bypass line (6) and the internal combustion engine (1), characterised in that the heater (7) which is independent of the engine is disposed in the return line (5a) upstream of the branch of the bypass line (6) and in that the outlet temperature (T_{A}) of the heat carrier from the heater (7) can be regulated to at least one predeterminable level on the basis of which the thermostatic valve (9) automatically and regardless of temperature controls various alternative circuits and whereby the thermostatic valve (9) can be bypassed by a device (23, 24) as a function of the pressure in a first branch of the feed line (3a).

2. A heating circuit according to Claim 1, characterised in that the outlet temperature (T_{A}) is controlled by means of a continuous heat output regulating arrangement.

3. A heating circuit according to Claim 1 or 2, characterised in that the outlet temperature (T_{A}) is regulated by a through-flow control arrangement.

4. A heating circuit according to one of the preceding Claims, characterised in that the predeterminable level of the outlet temperature (T_{A}) can be adjusted at a control device (30) on the heater (7) by means of a positioning element (31) disposed in the interior (32).

5. A heating circuit according to one of the preceding Claims, characterised in that the predeterminable level of the outlet temperature (T_{A}) is below the opening temperature (T_{O}) of the thermostatic valve (9).

6. A heating circuit according to one of Claims 1 to 4, characterised in that the predeterminable level of the outlet temperature (T_{A}) is above the temperature (T_{O}) at which the thermostatic valve opens.

7. A heating circuit according to one of the preceding Claims, characterised in that the thermostatic valve (9) closes the feed line (3a) upstream of the point at which the bypass line (6) enters and below the opening temperature (T_{O}).

8. A heating circuit according to one of the preceding Claims, characterised in that a non-return valve (28) is provided to prevent a flow of heat carrier from the thermostatic valve (9) via the bypass line (6) to the return line (5a, 5b).

9. A heating circuit according to Claim 8, characterised in that the non-return valve (28) forms one structural unit together with the thermostatic valve (9).

10. A heating circuit according to one of the preceding Claims, characterised in that as a pressure-dependent means of bypassing the thermostatic valve (9) there are in a main valve plate (21) thereof ports (22) which can be occluded by means of a secondary valve plate (23) biased by a spring (24).

## Revendications

1. Circuit d'un dispositif de chauffage d'un véhicule (7), indépendant du moteur, avec une conduite d'alimentation (3a, 3b) reliant un moteur à combustion interne (1) à un échangeur de chaleur (4) pour chauffer un habitacle (32) et comportant une pompe de circulation (2), une conduite de retour (5a, 5b) pour le retour d'un fluide caloporteur de l'échangeur de chaleur (4) vers le moteur à combustion interne (1), une conduite de dérivation (6) reliant la conduite d'alimentation (3b) à la conduite de retour (5a) et une soupape thermostatique (9) qui, en fonction de la température du fluide caloporteur, ouvre et ferme le passage du fluide caloporteur à travers la conduite de dérivation (6) et le moteur à combustion interne (1),
caractérisé en ce que
le dispositif de chauffage (7) indépendant du moteur est monté dans la conduite de retour (5a) en amont de l'embranchement de la conduite de dérivation (6), la température de sortie (T_{A}) du fluide caloporteur du dispositif de chauffage (7) étant réglable au moins à une valeur prédéterminée à laquelle la soupape thermostatique (9) commande automatiquement en fonction de la température, différentes variantes de circuit, la soupape thermostatique (9) pouvant être contournée par une installation (23, 24) en fonction de la pression dans une première branche de la conduite d'alimentation (3a).

2. Circuit de chauffage selon la revendication 1,
caractérisé en ce que
la régulation de la température de sortie (T_{A}) se fait à l'aide d'une régulation continue de la puissance de chauffage.

3. Circuit de chauffage selon la revendication 1 ou 2,
caractérisé en ce que
la régulation de la température de sortie (T_{A}) se fait par une régulation du débit.

4. Circuit de chauffage selon l'une des revendications précédentes,
caractérisé en ce que
la valeur prédéterminée de la température de sortie (T_{A}) se règle à l'aide d'un élément de réglage (31) placé dans l'habitacle (32) sur un organe de commande (30) du dispositif de chauffage (7).

5. Circuit de chauffage selon l'une des revendications précédentes,
caractérisé en ce que
la valeur prédéterminée de la température de sortie (T_{A}) se situe en dessous de la température d'ouverture (T_{O}) de la soupape thermostatique (9).

6. Circuit de chauffage selon l'une des revendications 1 à 4,
caractérisé en ce que
la valeur prédéterminée de la température de sortie (T_{A}) se situe au-dessus de la température d'ouverture (T_{O}) de la soupape thermostatique (9).

7. Circuit de chauffage selon l'une des revendications précédentes,
caractérisé en ce qu'
en dessous de la température d'ouverture (T_{O}), la soupape thermostatique (9) ferme la conduite d'alimentation (3a) en amont de l'embranchement de la conduite de dérivation (6).

8. Circuit de chauffage selon l'une des revendications précédentes,
caractérisé par
un clapet anti-retour (28) pour interdire le passage du fluide caloporteur de la soupape thermostatique (9) à travers la conduite de dérivation (6) jusque dans la conduite de retour (5a, 5b).

9. Circuit de chauffage selon la revendication 8,
caractérisé en ce que
le clapet anti-retour (28) forme un ensemble avec la soupape thermostatique (9).

10. Circuit de chauffage selon l'une des revendications précédentes,
caractérisé en ce que
comme installation dépendant de la pression, pour contourner la soupape thermostatique (9), le clapet de la soupape principale (21) comporte des orifices de passage (22) qui peuvent être fermés à l'aide d'un clapet de soupape auxiliaire (23) chargé par un ressort (24).
